# EUROPEAN PATENT APPLICATION

(11) **EP 4 707 055 A1**
(43) Date of publication of application: **11.03.2026**
(21) Application number: 24883628.0
(22) Date of filing: 27.11.2024
(51) Int. Cl.: B60L 53/302, B60L 53/31

(54) **ENERGY STORAGE DEVICE**

(30) Priority: 19.07.2024 CN 202421712408 U
(71) Applicant: Contemporary Amperex Technology Co., Ltd., Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/134947
(87) International publication number: WO 2026/016368

(57) **Abstract**

Embodiments of the present disclosure provide an energy storage device, belonging to the technical field of energy storage, in which a battery pack is installed in a cabinet, a charging converter is electrically connected to a battery pack and configured to convert electric energy input to or output from the battery pack, and a charging plug is electrically connected to the charging converter to deliver the electric energy converted by the charging converter. A temperature regulation flow channel of the battery pack and a temperature regulation flow channel of the charging converter are both arranged in the first circulation unit. The second circulation unit and the first circulation unit are isolated from each other. The temperature regulation flow channel of the charging plug is arranged in the second circulation unit. The first heat exchanger is arranged at least between the first circulation unit and the second circulation unit. The heat dissipation apparatus is arranged in one of the first circulation unit, the second circulation unit, and the first heat exchanger.

## Description

### CROSS-REFERENCE TO RELATED APPLICATION

The present disclosure is proposed based on Chinese Patent Application No. 202421713408.9 filed on July 19, 2024 and entitled "ENERGY STORAGE DEVICE", and claims priority to this Chinese Patent Application, which is incorporated here in the present disclosure by reference in its entirety.

### TECHNICAL FIELD

The present disclosure relates to the technical field of energy storage, and more particularly to an energy storage device.

### BACKGROUND

New energy batteries are increasingly applied in life and industry. For example, new energy vehicles equipped with the batteries have been widely used. In addition, the batteries are also increasingly applied in the field of energy storage and the like.

The cabinet of the energy storage device contains a battery pack, which supplies power to the charging plug so that the charging plug can charge electrical apparatuses such as electric vehicles. In the related art, the heat dissipation apparatus of the energy storage device has a large footprint.

### SUMMARY OF THE INVENTION

In view of this, embodiments of the present disclosure are intended to provide an energy storage device, aiming to reduce the footprint of the heat dissipation apparatus of the energy storage device.

In order to achieve the above objective, technical solutions in the embodiments of the present disclosure are implemented as follows.

The embodiments of the present disclosure provide an energy storage device, including:
a cabinet;
a battery pack installed in the cabinet;
a charging converter electrically connected to the battery pack and configured to convert electric energy input to or output from the battery pack;
a charging plug electrically connected to the charging converter to deliver the electric energy converted by the charging converter;
a first circulation unit in which a temperature regulation flow channel of the battery pack and a temperature regulation flow channel of the charging converter are both arranged;
a second circulation unit, the second circulation unit and the first circulation unit isolated from each other, a temperature regulation flow channel of the charging plug arranged in the second circulation unit;
a first heat exchanger arranged at least between the first circulation unit and the second circulation unit; and
a heat dissipation apparatus arranged in one of the first circulation unit, the second circulation unit, and the first heat exchanger.

In the embodiments of the present disclosure, the first circulation unit and the second circulation unit exchange heat through the first heat exchanger, so that it is not necessary to provide a respective heat dissipation apparatus for the first circulation unit and the second circulation unit separately, thereby reducing the number of heat dissipation apparatuses in the cabinet and helping to reduce the footprint of the heat dissipation apparatuses in the cabinet.

In an embodiment, the heat dissipation apparatus is arranged in the first circulation unit.

In the embodiments of the present disclosure, the temperature of the battery pack can be regulated during regulation of the temperature of the charging plug.

In an embodiment, the heat dissipation apparatus is a refrigerator, and the first circulation unit includes:
a first flow channel system;
a first circulation pump, the temperature regulation flow channel of the battery pack, the temperature regulation flow channel of the charging converter, and the first circulation pump arranged in the first flow channel system; and
a second heat exchanger arranged between the first flow channel system and the refrigerator.

In the embodiments of the present disclosure, in the process in which the first circulation pump circulates the temperature regulation medium continuously in the first flow channel system, the temperature regulation medium can repeatedly exchange heat between the battery pack and the charging converter.

In an embodiment, the cabinet has an energy storage interface, the energy storage device further includes an energy storage converter, the energy storage converter is electrically connected to the battery pack and the energy storage interface respectively to convert the electric energy input to or output from the battery pack, and the first flow channel system includes:
a primary flow channel, the corresponding heat exchange flow channel of the second heat exchanger, the corresponding heat exchange flow channel of the first heat exchanger, and the first circulation pump are connected in series to the primary flow channel; and
a secondary flow channel connected to the primary flow channel end to end, an input end of the secondary flow channel connected to an output end of the corresponding flow channel of the first heat exchanger, an output end of the secondary flow channel connected to an input end of the corresponding flow channel of the second heat exchanger, an output end of the corresponding flow channel of the second heat exchanger connected to an input end of the corresponding flow channel of the first heat exchanger, and the temperature regulation flow channel of the battery pack, the temperature regulation flow channel of the energy storage converter, and the temperature regulation flow channel of the charging converter all arranged on the secondary flow channel.

In the embodiments of the present disclosure, the first flow channel system first takes away the heat generated by the charging interface, and then takes away the heat generated by the battery pack, the energy storage converter, and the charging converter. The temperature regulation medium at the output end of the second heat exchanger has a great cooling capacity. The temperature regulation medium first flows through the output end of the first heat exchanger, and as there is a great temperature difference between it and the output end of the first heat exchange, it is possible to quickly take away the heat and quickly cool down the charging plug, thereby allowing a circuit element with a smaller flow-through sectional area of the charging plug and a reduced volume of the charging plug.

In an embodiment, there is one secondary flow channel, and the temperature regulation flow channel of the battery pack, the temperature regulation flow channel of the energy storage converter, and the temperature regulation flow channel of the charging converter are all connected in series to the secondary flow channel.

In the embodiments of the present disclosure, as long as there is temperature regulation medium flowing through the battery pack, there is temperature regulation medium flowing through the energy storage converter and the charging converter, thereby regulating the temperature of the battery pack, the energy storage converter, and the charging converter together.

In an embodiment, the energy storage converter is an AC/DC bidirectional converter, and the charging converter is a DC converter.

In the embodiments of the present disclosure, the AC/DC bidirectional converter can convert AC power into DC power, so that the external power grid can charge the energy storage device, and the DC converter can change the output voltage of the charging plug so as to adapt the voltage output by the charging plug to the electrical apparatus.

In an embodiment, the charging converter and the energy storage converter are both arranged in the cabinet.

In the embodiments of the present disclosure, the space inside the cabinet is reasonably utilized to arrange the charging converter and the energy storage converter, so that the charging converter and the energy storage converter are not exposed and occupy external space. In an embodiment, the refrigerator includes:
an evaporator arranged on the second heat exchanger;
a compressor, an input end of the compressor connected to an output end of the evaporator;
a condenser, an input end of the condenser connected to an output end of the compressor;
a fan installed in the cabinet and configured to cool the condenser; and
an expansion valve, an input end of the expansion valve connected to an output end of the condenser, and an output end of the expansion valve connected to the evaporator.

In the embodiments of the present disclosure, the charging plug, the battery pack, and the converter generate a lot of heat, and the refrigerator has high refrigeration efficiency, good cooling effect, and relatively stable refrigeration performance.

In an embodiment, the medium circulating in the first circulation unit is water, and/or the medium circulating in the second circulation unit is oil.

In the embodiments of the present disclosure, as the oil has insulating properties, regulating the temperature of the charging plug with the oil improves the safety of the charging plug. The temperature of the battery pack, the charging converter, and the energy storage converter is regulated with water. As water has high thermal conductivity and a high heat transfer rate, the temperature regulation efficiency for the battery pack, the charging converter, and the energy storage converter is enhanced.

In an embodiment, the heat dissipation apparatus is arranged above the battery pack.

In the embodiments of the present disclosure, the impact of heat from the heat dissipation apparatus on the battery pack is reduced.

In the energy storage device of the embodiments of the present disclosure, the first circulation unit and the second circulation unit are isolated from each other, the first heat exchanger is arranged at least between the first circulation unit and the second circulation unit, and the first circulation unit and the second circulation unit exchange heat through the first heat exchanger. The first circulation unit and the second circulation unit can both be affected by the temperature regulation by the heat dissipation apparatus, so it is not necessary to provide a respective heat dissipation apparatus for the first circulation unit and the second circulation unit separately. The heat dissipation apparatus is arranged in one of the first circulation unit, the second circulation unit, and the first heat exchanger, thereby reducing the number of heat dissipation apparatuses in the cabinet and helping to reducing the footprint of the heat dissipation apparatuses in the cabinet.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:

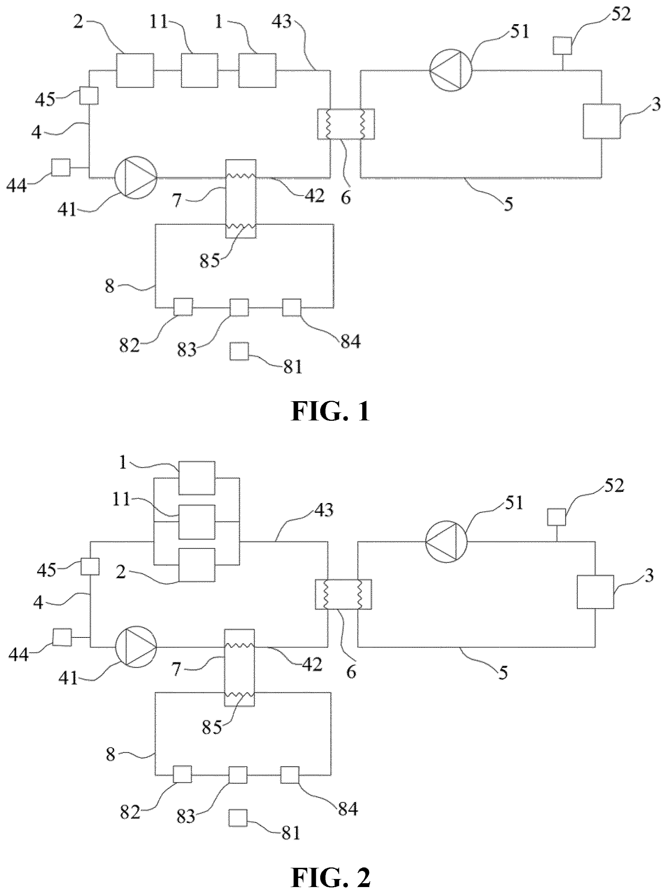

FIG. 1 is a schematic diagram of the connection of an energy storage device according to an embodiment of the present disclosure, in which a temperature regulation flow channel of a battery pack, a temperature regulation flow channel of an energy storage converter, and a temperature regulation flow channel of a charging converter are all connected in series to a secondary flow channel;
FIG. 2 is a schematic diagram of the connection of an energy storage device according to an embodiment of the present disclosure, in which a temperature regulation flow channel of a battery pack, a temperature regulation flow channel of an energy storage converter, and a temperature regulation flow channel of a charging converter are all connected in parallel to a secondary flow channel; and

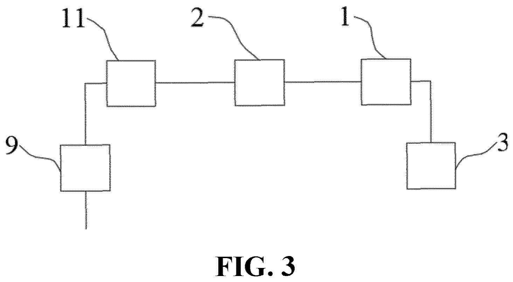

FIG. 3 is a circuit connection diagram of a partial structure of an energy storage device according to an embodiment of the present disclosure.

### Description of reference numerals

1. Charging converter; 11. Energy storage converter; 2. Battery pack; 3. Charging plug; 4. First circulation unit; 41. First circulation pump; 42. Primary flow channel; 43. Secondary flow channel; 44. Expansion water tank; 45. Heater; 5. Second circulation unit; 51. Second circulation pump; 52. Oil pot; 6. First heat exchanger; 7. Second heat exchanger; 8. Heat dissipation apparatus; 81. Fan; 82. Compressor; 83. Condenser; 84. Expansion valve; 85. Evaporator; 9. Energy storage interface.

### DETAILED DESCRIPTION

Examples of the technical solutions of the present disclosure will be described in detail below in conjunction with the drawings. The following embodiments are only used to more clearly illustrate the technical solution of the present disclosure, and therefore are only used as examples and shall not be used to limit the scope of protection of the present disclosure.

Unless otherwise defined, all technical and scientific terms used herein have the same meaning as commonly understood by those skilled in the art to which the present disclosure belongs. The terms used herein are only for the purpose of describing specific embodiments and are not intended to limit the present disclosure. The terms "including" and "having" and any variants thereof in the embodiments of the present disclosure are intended to cover non-exclusive inclusion.

In the description of the embodiments of the present disclosure, the technical terms "first," "second," "third," and the like are used only to distinguish between different objects, and shall not be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally indicates that the associated objects before and after it are in an "or" relationship.

In the description of the embodiments of the present disclosure, unless otherwise expressly specified and limited, the technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, an internal communication between two elements, or interaction between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects with little or no mutual interaction force, or contact between two objects with mutual interaction force.

In the related art, a battery pack in a cabinet of an energy storage device charges an electric vehicle and other electrical apparatuses through a charging plug. When the energy storage device is in use, the battery pack, the charging converter, and the charging plug all generate heat. The battery pack may typically be placed in the cabinet, and the charging plug typically needs to be in contact with the outside for easy use. The battery pack and the charging converter are arranged in one of the circulation units, and the charging plug is arranged in the other circulation unit. Each circulation unit is provided with a corresponding heat dissipation apparatus. In the process in which the energy storage device charges an electric vehicle or other electrical apparatuses, heat is dissipated from the two circulation units by their corresponding heat dissipation apparatuses respectively to enable cooling of the battery pack, the charging converter, and the charging plug. As there are many heat dissipation apparatuses, the heat dissipation apparatuses in the cabinet of the energy storage device have a large footprint.

The embodiments of the present disclosure provide an energy storage device, which includes a battery pack 2, a charging converter 1, a charging plug 3, a first circulation unit 4, a second circulation unit 5, a first heat exchanger 6, and a heat dissipation apparatus 8. The temperature regulation flow channel of the battery pack 2 and the temperature regulation flow channel of the charging converter 1 are both arranged in the first circulation unit 4, the temperature regulation flow channel of the charging plug 3 is arranged in the second circulation unit 5, the first heat exchanger 6 is arranged between the first circulation unit 4 and the second circulation unit 5, and the first circulation unit 4 and the second circulation unit 5 share the heat dissipation apparatus 8, which can reduce the volume of the energy storage device.

The energy storage device of the embodiments of the present disclosure is configured to store electricity for charging the electrical apparatus.

An electrical apparatus is an apparatus that uses electrical energy as the energy source to realize corresponding functions by consuming the electrical energy. By way of example, the electrical apparatus may be, but is not limited to, a mobile phone, a tablet, a laptop, an electric toy, an electric tool, a battery vehicle, an electric vehicle, a ship, a spacecraft, and the like. Among them, the electric toy may include a fixed or mobile electric toy, such as a game console, an electric car toy, an electric ship toy, an electric airplane toy, and the like. The spacecraft may include an airplane, a rocket, a space shuttle, a spaceship, and the like.

The energy storage device of the embodiments of the present disclosure can be seen with reference to FIGS. 1, 2 and 3. The energy storage device includes a cabinet, a battery pack 2, a charging converter 1, a charging plug 3, a first circulation unit 4, a second circulation unit 5, a first heat exchanger 6, and a heat dissipation apparatus 8. The battery pack 2 is installed in the cabinet, the charging converter 1 is electrically connected to the battery pack 2 and is configured to convert the electric energy input to or output from the battery pack 2, and the charging plug 3 is electrically connected to the charging converter 1 to deliver the electric energy converted by the charging converter 1. The temperature regulation flow channel of the battery pack 2 and the temperature regulation flow channel of the charging converter 1 are both arranged in the first circulation unit 4. The second circulation unit 5 and the first circulation unit 4 are isolated from each other. The temperature regulation flow channel of the charging plug 3 is arranged in the second circulation unit 5. The first heat exchanger 6 is arranged at least between the first circulation unit 4 and the second circulation unit 5. The heat dissipation apparatus 8 is arranged in one of the first circulation unit 4, the second circulation unit 5, and the first heat exchanger 6.

By way of example, the energy storage device includes one or at least two battery packs 2. When the energy storage device includes at least two battery packs 2, the at least two battery packs 2 are connected in parallel to increase the capacity of the energy storage device.

The battery pack 2 includes a box and a battery cell.

There may be at least two battery cells. The at least two battery cells may be directly connected in series or parallel or in parallel-series connection, and then the entirety composed of the at least two battery cells is placed in the box. Parallel-series connection refers to the connection of the at least two battery cells in both series and parallel. The at least two battery cells may first be connected in series, in parallel, or in parallel-series connection to form a battery module. Then at least two battery modules are connected in series, in parallel, or in parallel-series connection to form an entirety. Then the entirety composed of the at least battery modules connected in series, in parallel, or in parallel-series connection is placed in the box. The battery pack 2 may further include other structures. For example, the battery pack 2 may further include a busbar component for electrical connection between the at least two battery cells.

The battery cell in the battery pack 2 may be a secondary battery, and the secondary battery refers to a battery cell that can continue to be used by activating an active material by means of charging after the battery cell is discharged.

The battery cell includes a shell, an electrode assembly, positive and negative terminal posts, and a separator.

The shell may be a sealed structure or a non-sealed structure. By way of example, when the shell is a non-sealed structure, the shell serves to protect the electrode assembly, and a sealed bag is further included between the shell and the electrode assembly to encapsulate the electrode assembly and the electrolyte. Specifically, the sealed bag may be a bag-shaped insulating member and aluminum-plastic film.

The electrode assembly may be of a wound structure or a laminated structure.

By way of example, the energy storage device further includes a main control module, which can serve as a battery management unit of the battery pack 2 for monitoring and managing the battery pack 2. The main control module can monitor information such as the current, voltage, power, or temperature of the battery pack 2.

By way of example, the energy storage device further includes a master control module, which can serve as a battery management unit of the energy storage device for monitoring and managing the energy storage device. The master control module can monitor information such as the current, voltage, power, status of charge, or temperature of the energy storage device.

By way of example, the energy storage device further includes a fire-safety module, which includes a control panel, a detector, and an alarm apparatus. The fire-safety module is used to detect, alarm, or extinguish a fire in the energy storage device.

The charging converter 1 is a converter configured to convert the electric energy input or output between the battery pack 2 and the charging interface.

A converter is an electric device that changes the voltage, frequency, number of phases, and other electrical quantities or characteristics of a power supply system.

During use, the charging plug 3 is electrically connected to the electrical apparatus to transfer electrical energy to the electrical apparatus.

The first heat exchanger 6 is a heat exchanger configured to exchange heat between the first circulation unit 4 and the second circulation unit 5.

A heat exchanger is a device that transfers heat between two or more fluids at different temperatures between materials, allowing heat to be transferred from a fluid with a higher temperature to a fluid with a lower temperature.

The heat dissipation apparatus 8 is an apparatus configured for transferring, releasing, and absorbing heat.

The charging plug 3 is at least partially arranged outside the cabinet, or the charging plug 3 is entirely arranged outside the cabinet.

By way of example, there are at least two charging plugs 3.

By way of example, the electrical apparatus is an electric vehicle, and the charging plug 3 is a charging connector.

By way of example, there is one heat dissipation apparatus 8.

The expression that the first circulation unit 4 and the second circulation unit 5 are isolated from each other means that the temperature regulation medium in the temperature regulation flow channel on the first circulation unit 4 and the temperature regulation medium in the temperature regulation flow channel on the second circulation unit 5 are not in communication with each other.

The temperature regulation medium corresponding to the first circulation unit 4 circulates in the first circulation unit 4.

The temperature regulation medium corresponding to the first circulation unit 4 circulates between the temperature regulation flow channel of the battery pack 2 and the temperature regulation flow channel of the charging converter 1.

The temperature regulation medium corresponding to the second circulation unit 5 circulates in the second circulation unit 5. The temperature regulation medium circulating in the second circulation unit 5 flows through the charging plug 3 to regulate the temperature of the charging plug 3.

The heat dissipation apparatus 8 is arranged in one of the first circulation unit 4, the second circulation unit 5, and the first heat exchanger 6, which means that the heat dissipation apparatus 8 is arranged in the first circulation unit 4, or the heat dissipation apparatus 8 is arranged in the second circulation unit 5, or the heat dissipation apparatus 8 is arranged in the first heat exchanger 6. When one of the first circulation unit 4, the second circulation unit 5, and the first heat exchanger 6 is provided with the heat dissipation apparatus 8, the other two of the first circulation unit 4, the second circulation unit 5, and the first heat exchanger 6 are not provided with the heat dissipation apparatus 8.

By way of example, when the heat dissipation apparatus 8 is provided in the first circulation unit 4, the second circulation unit 5 and the first heat exchanger 6 are not provided with the heat dissipation apparatus 8.

The first heat exchanger 6 is arranged between the first circulation unit 4 and the second circulation unit 5. One of the heat exchange flow channels of the first heat exchanger 6 is arranged in the first circulation unit 4. The temperature regulation medium circulating in the first circulation unit 4 flows through the heat exchange flow channel corresponding to the first heat exchanger 6. The other heat exchange flow channel of the first heat exchanger 6 is arranged in the second circulation unit 5. The temperature regulation medium circulating in the second circulation unit 5 flows through the heat exchange flow channel corresponding to the first heat exchanger 6.

In the energy storage device of the embodiments of the present disclosure, the first circulation unit 4 and the second circulation unit 5 are isolated from each other. The first heat exchanger 6 is arranged at least between the first circulation unit 4 and the second circulation unit 5. The first circulation unit 4 and the second circulation unit 5 exchange heat through the first heat exchanger 6. The first circulation unit 4 and the second circulation unit 5 can both be affected by the temperature regulation by the heat dissipation apparatus 8, so that it is not necessary to provide a respective heat dissipation apparatus 8 for the first circulation unit 4 and the second circulation unit 5 separately. The heat dissipation apparatus 8 is arranged in one of the first circulation unit 4, the second circulation unit 5, and the first heat exchanger 6, thereby reducing the number of heat dissipation apparatuses 8 in the cabinet and helping to reduce the footprint of the heat dissipation apparatuses 8 in the cabinet.

In an embodiment, referring to FIGS. 1 and 2, the heat dissipation apparatus 8 is arranged in the first circulation unit 4.

It is to be noted that, when the heat dissipation apparatus 8 is provided in the first circulation unit 4, the second circulation unit 5 and the first heat exchanger 6 are not provided with the heat dissipation apparatus 8.

By way of example, the temperature regulation flow channels of the charging plug 3, the battery pack 2, and the charging converter 1 are all in communication with the corresponding heat exchange flow channels of the first heat exchanger 6.

In the embodiments of the present disclosure, the heat from the charging plug 3 is transferred to the temperature regulation flow channel of the first circulation unit 4 through the first heat exchanger 6. The heat dissipation apparatus 8 is arranged in the first circulation unit 4. In the process of temperature regulation of the charging plug 3, the temperature regulation medium circulating in the first circulation unit 4 has the power to flow through the temperature regulation flow channels of the battery pack 2 and the charging converter 1. In the case where the temperature regulation flow channels of the charging plug 3, the battery pack 2, and the charging converter 1 are all in communication with the corresponding heat exchange flow channels of the first heat exchanger 6, the temperature regulation medium circulates in the heat exchange flow channel corresponding to the first heat exchanger 6 and the temperature regulation flow channels of the battery pack 2 and the charging converter 1. In the process of temperature regulation of the charging plug 3, temperature regulation of the battery pack 2 can be achieved.

It can be understood that the heat dissipation apparatus 8 is not limited to being arranged in the first circulation unit 4. By way of example, the heat dissipation apparatus 8 is provided in the first heat exchanger 6, while the second circulation unit 5 and the first circulation unit 4 are not provided with the heat dissipation apparatus 8. By way of example, the heat dissipation apparatus 8 is provided in the second circulation unit 5, while the first heat exchanger 6 and the first circulation unit 4 are not provided with the heat dissipation apparatus 8.

In an embodiment, referring to FIGS. 1 and 2, the heat dissipation apparatus 8 is a refrigerator, the first circulation unit 4 includes a first flow channel system, a first circulation pump 41, and a second heat exchanger 7, the temperature regulation flow channel of the battery pack 2, the temperature regulation flow channel of the charging converter 1, and the first circulation pump 41 are arranged in the first flow channel system, and the second heat exchanger 7 is arranged between the first flow channel system and the refrigerator.

Refrigeration enables the internal temperature to be lower than the ambient temperature, and the cooling temperature is not limited to the ambient temperature.

The second heat exchanger 7 is arranged between the first flow channel system and the refrigerator. One of the heat exchange flow channels of the second heat exchanger 7 is arranged in the first flow channel system. The temperature regulation medium circulating in the first flow channel system flows through the heat exchange flow channel corresponding to the second heat exchanger 7. Another heat exchange flow channel of the second heat exchanger 7 is arranged in the refrigerator. The temperature regulation medium circulating in the refrigerator flows through the heat exchange flow channel corresponding to the second heat exchanger 7.

In the embodiments of the present disclosure, during the process in which the first circulation pump 41 circulates the temperature regulation medium continuously in the first flow channel system, the temperature regulation medium can repeatedly exchange heat between the battery pack 2 and the charging converter 1, and then exchange the heat in the first flow channel system to the refrigerator through the second heat exchanger 7, and the refrigerator cools the heat.

It can be understood that the heat dissipation apparatus 8 is not limited to a refrigerator. By way of example, the heat dissipation apparatus 8 is a medium container, and the heat from the medium container is blown away by a fan.

In an embodiment, referring to FIGS. 1 and 2, the cabinet has an energy storage interface 9, and the energy storage device includes an energy storage converter 11. The energy storage converter 11 is electrically connected to the battery pack 2 and the energy storage interface 9 respectively to convert the electric energy input to or output from the battery pack 2. The first flow channel system includes a primary flow channel 42 and a secondary flow channel 43. The corresponding heat exchange flow channel of the second heat exchanger 7, the corresponding heat exchange flow channel of the first heat exchanger 6, and the first circulation pump 41 are connected in series to the primary flow channel 42. The secondary flow channel 43 is connected to the primary flow channel 42 end to end. The input end of the secondary flow channel 43 is connected to the output end of the corresponding heat exchange flow channel of the first heat exchanger 6, the output end of the secondary flow channel 43 is connected to the input end of the corresponding heat exchange flow channel of the second heat exchanger 7, and the output end of the corresponding heat exchange flow channel of the second heat exchanger 7 is connected to the input end of the corresponding heat exchange flow channel of the first heat exchanger 6. The temperature regulation flow channel of the battery pack 2, the temperature regulation flow channel of the energy storage converter 11, and the temperature regulation flow channel of the charging converter 1 are all arranged on the secondary flow channel 43.

The energy storage converter 11 is a converter configured to convert electric energy input or output between the battery pack 2 and the energy storage interface 9.

By way of example, the energy storage interface 9 is electrically connected to an external power grid.

In the embodiments of the present disclosure, the corresponding heat exchange flow channel of the second heat exchanger 7, the corresponding heat exchange flow channel of the first heat exchanger 6, and the first circulation pump 41 are connected in series to the primary flow channel 42. The temperature regulation medium that has been converted by the second heat exchanger 7 is output from the output end of the second heat exchanger 7. The first circulation pump 41 circulates the temperature regulation medium of the first flow channel system in the primary flow channel 42 and the secondary flow channel 43 to transfer the heat in the primary flow channel 42 and the secondary flow channel 43 to the refrigerator. The input end of the secondary flow channel 43 is connected to the output end of the corresponding heat exchange flow channel of the first heat exchanger 6. The temperature regulation flow channel of the battery pack 2 and the temperature regulation flow channels of the energy storage converter 11 and the charging converter 1 are all arranged on the secondary flow channel 43. The output end of the first heat exchanger 6 transfers the heat of the charging plug 3 to the secondary flow channel 43. The temperature regulation medium in the secondary flow channel 43 first takes away the heat from the output end of the first heat exchanger 6, and then takes away the heat from the battery pack 2, the energy storage converter 11, and the charging converter 1. The output end of the secondary flow channel 43 is connected to the input end of the corresponding flow channel of the second heat exchanger 7. The heat is transferred to the second heat exchanger 7 through the output end of the secondary flow channel 43, and then transferred to the refrigerator by the second heat exchanger 7. The first flow channel system first takes away the heat generated by the charging interface, and then takes away the heat generated by the battery pack 2, the energy storage converter 11, and the charging converter 1. The temperature regulation medium at the output end of the second heat exchanger 7 has a large cooling capacity. The temperature regulation medium first flows through the output end of the first heat exchanger 6, and as there is a great temperature difference between it and the output end of the first heat exchange 6, it is possible to quickly take away the heat and quickly cool down the charging plug 3, thereby allowing a circuit element with a smaller flow-through sectional area of the charging plug 3 and a reduced volume of the charging plug 3.

It can be understood that the energy storage device may not be provided with the energy storage converter 11.

By way of example, an energy storage converter is provided on the external power grid to convert the electric energy input to or output from the external power grid.

In an embodiment, referring to FIG. 1, there is one secondary flow channel 43, and the temperature regulation flow channel of the battery pack 2, the temperature regulation flow channel of the energy storage converter 11, and the temperature regulation flow channel of the charging converter 1 are all connected in series to the secondary flow channel 43.

In the embodiments of the present disclosure, the temperature regulation flow channel of the battery pack 2, the temperature regulation flow channel of the energy storage converter 11, and the temperature regulation flow channel of the charging converter 1 are all connected in series to the secondary flow channel 43. As long as there is temperature regulation medium flowing through the battery pack 2, there is temperature regulation medium flowing through the energy storage converter 11 and the charging converter 1, thereby regulating the temperature of the battery pack 2, the energy storage converter 11, and the charging converter 1 together.

In an embodiment, referring to FIG. 2, the secondary flow channel 43 where the temperature regulation flow channel of the battery pack 2 is located, the secondary flow channel 43 where the temperature regulation flow channel of the energy storage converter 11 is located, and the secondary flow channel 43 where the temperature regulation flow channel of the charging converter 1 is located are connected in parallel.

In an embodiment, the energy storage device includes a heater 45, which is arranged on the first circulation unit 4. The heat exchange flow channel of the heater 45 is connected in series to the secondary flow channel 43 where the temperature regulation flow channel of the battery pack 2 is located. In low temperature conditions, when the battery pack 2 needs to start operating, the heater 45 can heat the temperature regulation flow channel of the battery pack 2 to place the battery pack 2 at a temperature at which it can be started. When the battery pack 2 is being charged or the battery pack 2 is being discharged, the heater 45 does not operate.

In an embodiment, the energy storage converter 11 is an AC/DC bidirectional converter, and the charging converter 1 is a DC converter.

An AC-DC bidirectional converter is a converter that converts AC power into DC power or converts DC power into AC power.

A DC converter is a converter that converts DC power into the needed DC power.

By way of example, the AC/DC bidirectional converter is an AC/DC converter.

By way of example, the DC converter is a DC/DC converter.

In the embodiments of present disclosure, the AC/DC bidirectional converter can convert AC power into DC power, so that the external power grid can charge the energy storage device, and the DC converter can change the output voltage of the charging plug 3 so as to adapt the voltage output by the charging plug 3 to the electrical apparatus.

In an embodiment, the refrigerator includes an evaporator 85, a compressor 82, a condenser 83, a fan 81, and an expansion valve 84. The evaporator 85 is arranged on the second heat exchanger 7, the input end of the compressor 82 is connected to the output end of the evaporator 85, the input end of the condenser 83 is connected to the output end of the compressor 82, the fan 81 is installed in the cabinet and configured to cool the condenser 83,the input end of the expansion valve 84 is connected to the output end of the condenser 83, and the output end of the expansion valve 84 is connected to the evaporator 85.

For example, the external temperature regulation medium may be continuously renewed and enter the refrigerator, and then flow out of the refrigerator to take away the heat.

By way of example, there is temperature regulation medium inside the refrigerator, and the temperature regulation medium circulates inside the refrigerator.

By way of example, the fan 81 blows cold air toward the condenser 83 to take away the heat from the condenser 83.

In the embodiments of the present disclosure, during the operation of the energy storage device, the first circulation system transfers the heat generated by the battery pack 2, the energy storage converter 11, the charging converter 1, and the charging plug 3 to the second heat exchanger 7, and the second heat exchanger 7 transfers the heat of the first circulation system to the refrigerator. The battery pack 2, the energy storage converter 11, the charging converter 1, and the charging plug 3 generate a lot of heat, which is cooled by the refrigerator. The refrigerator has high refrigeration efficiency, good cooling effect, and relatively stable refrigeration performance.

It can be understood that the structure of the refrigerator is not limited. By way of example, the refrigerator is a semiconductor refrigerator.

In an embodiment, the evaporator 85 is arranged on the second heat exchanger 7, and the evaporator 85 absorbs the heat from the second heat exchanger 7 to evaporate the cooling fluid from liquid into gas for cooling down. The compressor 82 compresses the cooling fluid flowing out of the evaporator 85, and the condenser 83 cools the cooling fluid discharged from the compressor 82 from gas into liquid. The fan 81 is configured to cool the condenser 83, and the expansion valve 84 reduces the pressure of the cooling fluid cooled by the condenser 83, so that the cooling fluid reenters the evaporator 85 to absorb the heat from the second heat exchanger 7, thereby realizing circulation of the cooling fluid in the heat dissipation apparatus 8.

In an embodiment, the medium circulating in the first circulation unit 4 is water, and/or the medium circulating in the second circulation unit 5 is oil.

It is to be noted that the oil in the embodiments of the present disclosure is non-electrically conductive oil. For example, it is cooking oil, lubricating oil, or gasoline.

By way of example, the medium circulating in the first circulation unit 4 is water, and/or the medium circulating in the second circulation unit 5 is oil.

By way of example, the medium circulating in the first circulation unit 4 is water.

By way of example, the medium circulating in the second circulation unit 5 is oil.

In the embodiments of the present disclosure, the charging plug 3 is arranged on the second circulation unit 5. The charging plug 3 is connected to the electrical apparatus outside the cabinet. The charging plug 3 is likely to be damaged. As oil has insulating properties, the temperature of the charging plug 3 is regulated with oil, so that even if the charging plug 3 is damaged, causing the temperature regulation medium to flow out, the safety hazard of electric leakage is reduced, thereby improving the safety of the charging plug 3. The battery pack 2, the energy storage converter 11, and the charging converter 1 are all arranged in the first circulation unit 4. The battery pack 2 is installed in the cabinet so as not to be easily damaged. The temperature of the battery pack 2, the energy storage converter 11, and the charging converter 1 is regulated with water. As water has high thermal conductivity and a high heat transfer rate, the temperature regulation efficiency for the battery pack 2, the charging converter 11, and the energy storage converter 1 is enhanced.

It can be understood that the temperature regulation medium in the second circulation unit 5 is not limited to oil, and the temperature regulation medium in the first circulation unit 4 is not limited to water. By way of example, the temperature regulation medium in the second circulation unit 5 is air, and the temperature regulation medium in the first circulation unit 4 is air.

In an embodiment, the charging converter 1 and the energy storage converter 11 are both arranged in the cabinet.

In the embodiments of present disclosure, the space inside the cabinet is reasonably utilized to arrange the charging converter 1 and the energy storage converter 11, so that the charging converter 1 and the energy storage converter 11 are not exposed and occupy external space.

It can be understood that the charging converter 1 and the energy storage converter 11 are not limited to being arranged in the cabinet. By way of example, the charging converter 1 and the energy storage converter 11 are both arranged outside the cabinet.

In an embodiment, the heat dissipation apparatus 8 is arranged above the battery pack 2.

In the embodiments of the present disclosure, hot air typically rises, and the heat dissipation apparatus 8 is arranged above the battery pack 2 to reduce the impact of the heat from the heat dissipation apparatus 8 on the battery pack 2.

In an embodiment, the second circulation unit 5 includes a second flow channel system and a second circulation pump 51, and the temperature regulation flow channel of the charging plug 3 and the second circulation pump 51 are arranged in the first flow channel system.

In the embodiments of the present disclosure, the temperature regulation medium in the second flow channel system absorbs the heat generated by the charging plug 3, the second circulation pump 51 circulates the temperature regulation medium in the second flow channel system within the flow channel, and the heat in the second flow channel system is transferred to the first flow channel system through the first heat exchanger 6.

In an embodiment, the second circulation pump 51 is an oil pump.

In an embodiment, the energy storage device further includes an oil pot 52 and an expansion water tank 44, the oil pot 52 is connected to the second circulation unit 5, and the expansion water tank 44 is connected to the first circulation unit 4.

In an embodiment, referring to FIG. 1, the battery pack 2 is installed in the cabinet, the charging converter 1 is electrically connected to the battery pack 2, the charging converter 1 is configured to convert the electric energy input to or output from the battery pack 2, the charging plug 3 is electrically connected to the charging converter 1 to deliver the electric energy converted by the charging converter 1, the temperature regulation flow channel of the battery pack 2 and the temperature regulation flow channel of the charging converter 1 are both arranged in the first circulation unit 4. The second circulation unit 5 and the first circulation unit 4 are isolated from each other. The temperature regulation flow channel of the charging plug 3 is arranged in the second circulation unit 5, the first heat exchanger 6 is arranged at least between the first circulation unit 4 and the second circulation unit 5, and the heat dissipation apparatus 8 is arranged in one of the first circulation unit 4, the second circulation unit 5, and the first heat exchanger 6. The heat dissipation apparatus 8 is arranged in the first circulation unit 4, and the heat dissipation apparatus 8 is a refrigerator. The first circulation unit 4 includes the first flow channel system, the first circulation pump 41, and the second heat exchanger 7. The temperature regulation flow channel of the battery pack 2, the temperature regulation flow channel of the charging converter 1, and the first circulation pump 41 are arranged in the first flow channel system. The second heat exchanger 7 is arranged between the first flow channel system and the refrigerator. The energy storage converter 11 is electrically connected to the battery pack 2 and the energy storage interface 9 respectively to convert the electric energy input to or output from the battery pack 2. The first flow channel system includes a primary flow channel 42 and a secondary flow channel 43. The corresponding heat exchange flow channel of the second heat exchanger 7, the corresponding heat exchange flow channel of the first heat exchanger 6, and the first circulation pump 41 are connected in series to the primary flow channel 42. The secondary flow channel 43 is connected to the primary flow channel 42 end to end. The input end of the secondary flow channel 43 is connected to the output end of the corresponding heat exchange flow channel of the first heat exchanger 6, the output end of the secondary flow channel 43 is connected to the input end of the corresponding heat exchange flow channel of the second heat exchanger 7,and the output end of the corresponding heat exchange flow channel of the second heat exchanger 7 is connected to the input end of the corresponding heat exchange flow channel of the first heat exchanger 6. The temperature regulation flow channel of the battery pack 2, the temperature regulation flow channel of the energy storage converter 11, and the temperature regulation flow channel of the charging converter 1 are all arranged on the secondary flow channel 43. There is one secondary flow channel 43. The temperature regulation flow channel of the battery pack 2, the temperature regulation flow channel of the energy storage converter 11, and the temperature regulation flow channel of the charging converter 1 are all connected in series to the secondary flow channel 43. The energy storage converter 11 is an AC/DC bidirectional converter, and the charging converter 1 is a DC converter. The evaporator 85 is arranged on the second heat exchanger 7, the input end of the compressor 82 is connected to the output end of the evaporator 85, and the input end of the condenser 83 is connected to the output end of the compressor 82. The fan 81 is installed in the cabinet and configured to cool the condenser 83. The input end of the expansion valve 84 is connected to the output end of the condenser 83, and the output end of the expansion valve 84 is connected to the evaporator 85. The medium circulating in the first circulation unit 4 is water, and the medium circulating in the second circulation unit 5 is oil. The heat dissipation apparatus 8 is arranged above the battery pack 2, and the charging converter 1 and the energy storage converter 11 are both arranged in the cabinet.

The above embodiments are merely intended for illustrating rather than limiting the technical solutions of the present disclosure. Although the present disclosure has been described in detail with reference to the various embodiments above, those of ordinary skill in the art should understand that the technical solutions specified in the various embodiments above may still be modified, or some or all of the technical features therein may be equivalently substituted; and such modifications or substitutions do not cause the essence of the corresponding technical solutions to depart from the scope of the technical solutions of the various embodiments of the present disclosure and shall fall within the scope the present disclosure. In particular, the technical features mentioned in the various embodiments can be combined in any manner as long as there is no structural conflict. The present disclosure is not limited to the specific embodiments disclosed herein, but rather includes all technical solutions falling within the scope of the present disclosure.

## Claims

1. An energy storage device, comprising:
a cabinet;
a battery pack installed in the cabinet;
a charging converter electrically connected to the battery pack and configured to convert electric energy input to or output from the battery pack;
a charging plug electrically connected to the charging converter to deliver the electric energy converted by the charging converter;
a first circulation unit in which a temperature regulation flow channel of the battery pack and a temperature regulation flow channel of the charging converter are both arranged;
a second circulation unit, the second circulation unit and the first circulation unit isolated from each other, a temperature regulation flow channel of the charging plug arranged in the second circulation unit;
a first heat exchanger arranged at least between the first circulation unit and the second circulation unit; and
a heat dissipation apparatus arranged in one of the first circulation unit, the second circulation unit, and the first heat exchanger.

2. The energy storage device according to claim 1, wherein the heat dissipation apparatus is arranged in the first circulation unit.

3. The energy storage device according to claim 2, wherein the heat dissipation apparatus is a refrigerator, and the first circulation unit comprises:
a first flow channel system;
a first circulation pump, the temperature regulation flow channel of the battery pack, the temperature regulation flow channel of the charging converter, and the first circulation pump arranged in the first flow channel system; and
a second heat exchanger arranged between the first flow channel system and the refrigerator.

4. The energy storage device according to claim 3, wherein the cabinet has an energy storage interface, the energy storage device further comprises an energy storage converter, the energy storage converter is electrically connected to the battery pack and the energy storage interface respectively to convert the electric energy input to or output from the battery pack, and the first flow channel system comprises:
a primary flow channel, a corresponding heat exchange flow channel of the second heat exchanger, a corresponding heat exchange flow channel of the first heat exchanger, and the first circulation pump are connected in series to the primary flow channel; and
a secondary flow channel connected to the primary flow channel end to end, an input end of the secondary flow channel connected to an output end of the corresponding heat exchange flow channel of the first heat exchanger, an output end of the secondary flow channel connected to an input end of the corresponding heat exchange flow channel of the second heat exchanger, an output end of the corresponding heat exchange flow channel of the second heat exchanger connected to an input end of the corresponding heat exchange flow channel of the first heat exchanger, and the temperature regulation flow channel of the battery pack, the temperature regulation flow channel of the energy storage converter, and the temperature regulation flow channel of the charging converter all arranged on the secondary flow channel.

5. The energy storage device according to claim 4, wherein there is one secondary flow channel, and the temperature regulation flow channel of the battery pack, the temperature regulation flow channel of the energy storage converter, and the temperature regulation flow channel of the charging converter are all connected in series to the secondary flow channel.

6. The energy storage device according to claim 4 or 5, wherein the energy storage converter is an AC/DC bidirectional converter, and the charging converter is a DC converter.

7. The energy storage device according to any one of claims 4 to 6, wherein the charging converter and the energy storage converter are both arranged in the cabinet.

8. The energy storage device according to any one of claims 3 to 7, wherein the refrigerator comprises:
an evaporator arranged on the second heat exchanger;
a compressor, an input end of the compressor connected to an output end of the evaporator;
a condenser, an input end of the condenser connected to an output end of the compressor;
a fan installed in the cabinet and configured to cool the condenser; and
an expansion valve, an input end of the expansion valve connected to an output end of the condenser, and an output end of the expansion valve connected to the evaporator.

9. The energy storage device according to any one of claims 1 to 8, wherein a medium circulating in the first circulation unit is water, and a medium circulating in the second circulation unit is oil.

10. The energy storage device according to any one of claims 1 to 9, wherein the heat dissipation apparatus is arranged above the battery pack.
